# EUROPEAN PATENT SPECIFICATION

(11) **EP 3 219 148 B1**
(45) Date of publication and mention of the grant of the patent: **12.08.2020**
(21) Application number: 15858774.1
(22) Date of filing: 10.11.2015
(51) Int. Cl.: H04W 36/00, H04W 80/10, H04W 8/04

(54) **APPARATUS AND METHOD FOR HANDLING SINGLE RADIO VOICE CALL CONTINUITY HANDOVER**
VORRICHTUNG UND VERFAHREN ZUR HANDHABUNG DER WEITERREICHUNG VON EINZELFUNK-SPRACHANRUFKONTINUITÄT
APPAREIL ET PROCÉDÉ DE TRAITEMENT D'UN TRANSFERT AVEC CONTINUITÉ D'APPEL VOCAL RADIO UNIQUE

(30) Priority: 10.11.2014 US 201462077788 P; 26.03.2015 US 201562138839 P; 18.06.2015 US 201514743747; 05.10.2015 KR 20150139629
(43) Date of publication of application: 20.09.2017
(73) Proprietor: Samsung Electronics Co., Ltd., Gyeonggi-do 16677 (KR)
(72) Inventor: WONG, Curt C., King County, Washington 98004 (US); JEONG, Sang-Soo, Suwon-si Gyonggi-do 16456 (KR)
(74) Representative: Nederlandsch Octrooibureau
(86) International application number: PCT/KR2015/012022
(87) International publication number: WO 2016/076591

(56) References cited:
- EP-A1- 2 263 404
- EP-A1- 2 764 724
- WO-A1-2013/050061
- WO-A1-2014/071391
- US-A1- 2010 040 020
- US-A1- 2011 274 090
- US-A1- 2014 126 714
- US-A1- 2014 321 428
- "3 rd Generation Partnership Project; Technical Specification Group Services and System Aspects; Service requirements for the Internet Protocol (IP) Multimedia core network Subsystem (IMS); Stage 1 (Release 12)", 3GPP DRAFT; 22228-C70, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 27 June 2014 (2014-06-27), XP050835058, Retrieved from the Internet: URL:http://www.3gpp.org/ftp/tsg_sa/WG1_Ser v/TSGS1_67_SophiaAntipolis/postSA64_specs/ [retrieved on 2014-06-27]
- '3GPP; TSG SA; IP Multimedia Subsystem (IMS); Stage 2 (Release 13)' 3GPP TS 23.228 V13.0.0 22 September 2014, pages 1 - 311, XP055440856 Retrieved from the Internet: <URL:http://www.3gpp.org/DynaReport/23228.h tm>

## Description

### Technical Field

The present application relates generally to wireless communications and, more specifically, to a system and method for handling a Single Radio Voice Call Continuity (SRVCC) handover.

### Background Art

In addition to IMS based voice services over LTE (VoLTE), browser based applications such as Web Real-Time-communication Services (WebRTC) can also be used to provide voice communication services. 3GPP has developed "WebRTC access to IMS -network-based architecture" in Technical Specification (TS) 23.228 in which the WebRTC client in an LTE UE can connect to an operator IMS over LTE by having an IMS functionality in the WebRTC client, called "WebRTC IMS Client" or WIC. This technology allows the operator to offer IMS services, such as connecting multimedia voice session to other IMS network, with good QoS to WebRTC client.

WO 2014/071391 A1 discloses WebRTC; EP 2764724A1 and EP 2263404 A1 disclose transmitting SRVCC capability information and procedure for a handover between a packet switching (PS) and a circuit switching (CS); US 2010/040020 A1 discloses performing a handover to the CS without SRVCC indication by using call-type identifier.

### Disclosure of Invention

### Solution to Problem

The invention is set out in the appended set of claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Definitions for other certain words and phrases are provided throughout this patent document. Those of ordinary skill in the art should understand that in many if not most instances, such definitions apply to prior as well as future uses of such defined words and phrases.

### Brief Description of Drawings

For a more complete understanding of this disclosure and its advantages, reference is now made to the following description, taken in conjunction with the accompanying drawings, in which:
FIGURE 1 illustrates an example wireless network according to embodiments of the present disclosure;
FIGURES 2A and 2B illustrate example wireless transmit and receive paths according to embodiments of the present disclosure;
FIGURE 3A illustrates an example user equipment according to this disclosure;
FIGURE 3B illustrates an example enhanced NodeB (eNB) according to this disclosure;
FIGURE 4 illustrates the overall architecture for handling a Single Radio Voice Call Continuity (SRVCC) handover process according to embodiments of the present disclosure;
FIGURE 5 illustrates a flowchart for handling a SRVCC handover by switching a SRVCC capability by a UE according to embodiments of the present disclosure;
FIGURE 6 illustrates a flowchart for handling a SRVCC handover process by the explicit indication from Policy Control and Charging (PCC) according to one or more embodiments of the present disclosure;
FIGURE 7 illustrates a flowchart for handling a SRVCC handover process in a HSS push model according to one or more embodiments of the present disclosure;
FIGURES 8A and 8B illustrate flowcharts for handling a SRVCC handover process by APN-based MME control according to embodiments of the present disclosure; and
FIGURE 9 illustrates a flowchart for handling the SRVCC handover by APN-based explicit indication according to embodiments of the present disclosure.

### Best Mode for Carrying out the Invention

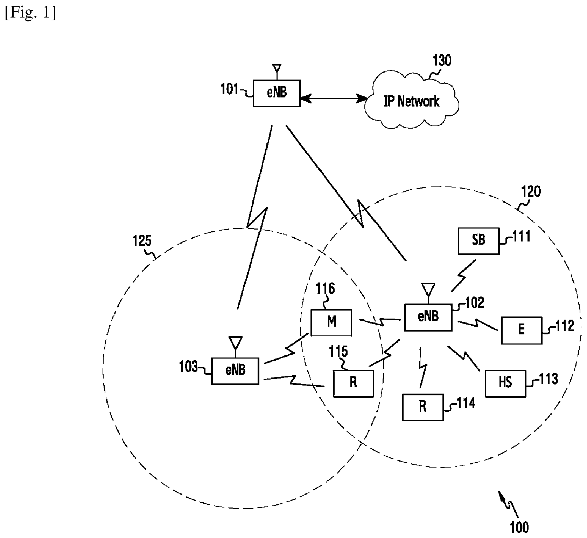

FIGURES 1 through 9, discussed below, and the various embodiments used to describe the principles of the present disclosure in this patent document are by way of illustration only and should not be construed in any way to limit the scope of the disclosure. Those skilled in the art will understand that the principles of this disclosure may be implemented in any suitably arranged device or system.

The following documents and standards descriptions are hereby incorporated into the present disclosure as if fully set forth herein: 3GPP Technical Specification (TS) 23.228 version 12.5.0, "IP Multimedia Subsystem (IMS); Stage 2"; 3GPP TS 23.216 version 12.1.0, "Single Radio Voice Call Continuity (SRVCC); Stage 2"; 3GPP Technical Requirement No. 23.706 version 0.1.1, "Study on enhancements to Web Real Time Communication (WebRTC) access to IP Multimedia Subsystem (IMS)"; 3GPP TS 23.237 version 12.7.0, "IMS Service Continuity; Stage 2"; 3GPP TS 23.203 version 12.5.0, "Policy and charging control architecture"; and 3GPP TS 23.401 version 12.5.0, "General Packet Radio Service (GPRS) enhancements for Evolved Universal Terrestrial Radio Access Network (E-UTRAN)".

FIGURE 1 illustrates an example wireless network 100 according to this disclosure. The embodiment of the wireless network 100 shown in FIGURE 1 is for illustration only. Other embodiments of the wireless network 100 could be used without departing from the scope of this disclosure.

As shown in FIGURE 1, the wireless network 100 includes an eNodeB (eNB) 101, an eNB 102, and an eNB 103. The eNB 101 communicates with the eNB 102 and the eNB 103. The eNB 101 also communicates with at least one Internet Protocol (IP) network 130, such as the Internet, a proprietary IP network, or other data network.

Depending on the network type, other well-known terms may be used instead of "eNodeB" or "eNB," such as "base station" or "access point." For the sake of convenience, the terms "eNodeB" and "eNB" are used in this patent document to refer to network infrastructure components that provide wireless access to remote terminals. Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

The eNB 102 provides wireless broadband access to the network 130 for a first plurality of user equipments (UEs) within a coverage area 120 of the eNB 102. The first plurality of UEs includes a UE 111, which may be located in a small business (SB); a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M) like a cell phone, a wireless laptop, a wireless PDA, or the like. The eNB 103 provides wireless broadband access to the network 130 for a second plurality of UEs within a coverage area 125 of the eNB 103. The second plurality of UEs includes the UE 115 and the UE 116. In some embodiments, one or more of the eNBs 101-103 may communicate with each other and with the UEs 111-116 using 5G, LTE, LTE-A, WiMAX, or other advanced wireless communication techniques.

Dotted lines show the approximate extents of the coverage areas 120 and 125, which are shown as approximately circular for the purposes of illustration and explanation only. It should be clearly understood that the coverage areas associated with eNBs, such as the coverage areas 120 and 125, may have other shapes, including irregular shapes, depending upon the configuration of the eNBs and variations in the radio environment associated with natural and man-made obstructions.

As described in more detail below, one or more of BS 101, BS 102 and BS 103 support continuity of a Single Radio Voice Call Continuity (SRVCC) handover as described in embodiments of the present disclosure. In some embodiments, one or more of BS 101, BS 102 and BS 103 support communications between entities, such as web Real Time Communication (RTC).

Although FIGURE 1 illustrates one example of a wireless network 100, various changes may be made to FIGURE 1. For example, the wireless network 100 could include any number of eNBs and any number of UEs in any suitable arrangement. Also, the eNB 101 could communicate directly with any number of UEs and provide those UEs with wireless broadband access to the network 130. Similarly, each eNB 102-103 could communicate directly with the network 130 and provide UEs with direct wireless broadband access to the network 130. Further, the eNB 101, 102, and/or 103 could provide access to other or additional external networks, such as external telephone networks or other types of data networks.

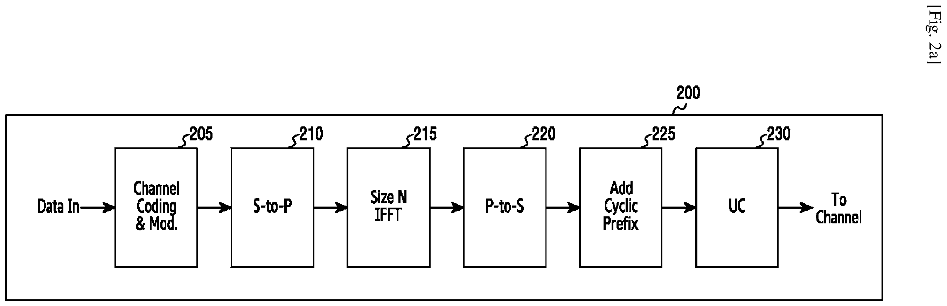

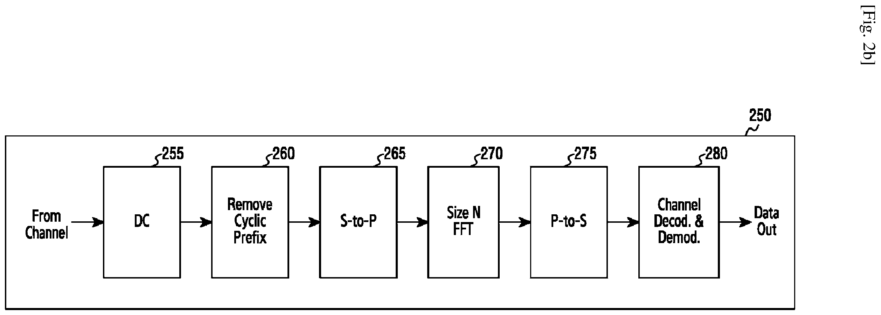

FIGURES 2A and 2B illustrate example wireless transmit and receive paths according to this disclosure. In the following description, a transmit path 200 may be described as being implemented in an eNB (such as eNB 102), while a receive path 250 may be described as being implemented in a UE (such as UE 116). However, it will be understood that the receive path 250 could be implemented in an eNB and that the transmit path 200 could be implemented in a UE. In some embodiments, the receive path 250 is configured to support continuity of a Single Radio Voice Call Continuity (SRVCC) handover as described in embodiments of the present disclosure.

The transmit path 200 includes a channel coding and modulation block 205, a serial-to-parallel (S-to-P) block 210, a size N Inverse Fast Fourier Transform (IFFT) block 215, a parallel-to-serial (P-to-S) block 220, an add cyclic prefix block 225, and an up-converter (UC) 230. The receive path 250 includes a down-converter (DC) 255, a remove cyclic prefix block 260, a serial-to-parallel (S-to-P) block 265, a size N Fast Fourier Transform (FFT) block 270, a parallel-to-serial (P-to-S) block 275, and a channel decoding and demodulation block 280.

In the transmit path 200, the channel coding and modulation block 205 receives a set of information bits, applies coding (such as a low-density parity check (LDPC) coding), and modulates the input bits (such as with Quadrature Phase Shift Keying (QPSK) or Quadrature Amplitude Modulation (QAM)) to generate a sequence of frequency-domain modulation symbols. The serial-to-parallel block 210 converts (such as de-multiplexes) the serial modulated symbols to parallel data in order to generate N parallel symbol streams, where N is the IFFT/FFT size used in the eNB 102 and the UE 116. The size N IFFT block 215 performs an IFFT operation on the N parallel symbol streams to generate time-domain output signals. The parallel-to-serial block 220 converts (such as multiplexes) the parallel time-domain output symbols from the size N IFFT block 215 in order to generate a serial time-domain signal. The add cyclic prefix block 225 inserts a cyclic prefix to the time-domain signal. The up-converter 230 modulates (such as up-converts) the output of the add cyclic prefix block 225 to an RF frequency for transmission via a wireless channel. The signal may also be filtered at baseband before conversion to the RF frequency.

A transmitted RF signal from the eNB 102 arrives at the UE 116 after passing through the wireless channel, and reverse operations to those at the eNB 102 are performed at the UE 116. The down-converter 255 down-converts the received signal to a baseband frequency, and the remove cyclic prefix block 260 removes the cyclic prefix to generate a serial time-domain baseband signal. The serial-to-parallel block 265 converts the time-domain baseband signal to parallel time domain signals. The size N FFT block 270 performs an FFT algorithm to generate N parallel frequency-domain signals. The parallel-to-serial block 275 converts the parallel frequency-domain signals to a sequence of modulated data symbols. The channel decoding and demodulation block 280 demodulates and decodes the modulated symbols to recover the original input data stream.

Each of the eNBs 101-103 may implement a transmit path 200 that is analogous to transmitting in the downlink to UEs 111-116 and may implement a receive path 250 that is analogous to receiving in the uplink from UEs 111-116. Similarly, each of UEs 111-116 may implement a transmit path 200 for transmitting in the uplink to eNBs 101-103 and may implement a receive path 250 for receiving in the downlink from eNBs 101-103.

Each of the components in FIGURES 2A and 2B can be implemented using only hardware or using a combination of hardware and software/firmware. As a particular example, at least some of the components in FIGURES 2A and 2B may be implemented in software, while other components may be implemented by configurable hardware or a mixture of software and configurable hardware. For instance, the FFT block 270 and the IFFT block 215 may be implemented as configurable software algorithms, where the value of size N may be modified according to the implementation.

Furthermore, although described as using FFT and IFFT, this is by way of illustration only and should not be construed to limit the scope of this disclosure. Other types of transforms, such as Discrete Fourier Transform (DFT) and Inverse Discrete Fourier Transform (IDFT) functions, could be used. It will be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURES 2A and 2B illustrate examples of wireless transmit and receive paths, various changes may be made to FIGURES 2A and 2B. For example, various components in FIGURES 2A and 2B could be combined, further subdivided, or omitted and additional components could be added according to particular needs. Also, FIGURES 2A and 2B are meant to illustrate examples of the types of transmit and receive paths that could be used in a wireless network. Any other suitable architectures could be used to support wireless communications in a wireless network.

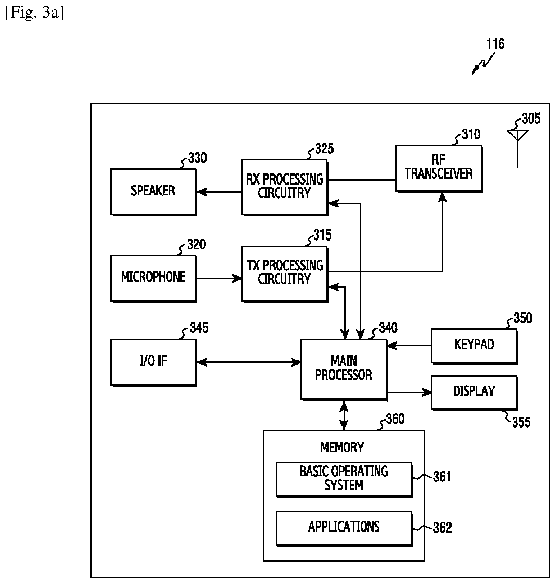

FIGURE 3A illustrates an example UE 116 according to this disclosure. The embodiment of the UE 116 illustrated in FIGURE 3A is for illustration only, and the UEs 111-115 of FIGURE 1 could have the same or similar configuration. However, UEs come in a wide variety of configurations, and FIGURE 3A does not limit the scope of this disclosure to any particular implementation of a UE.

As shown in FIGURE 3A, the UE 116 includes an antenna 305, a radio frequency (RF) transceiver 310, transmit (TX) processing circuitry 315, a microphone 320, and receive (RX) processing circuitry 325. The UE 116 also includes a speaker 330, a main processor 340, an input/output (I/O) interface (IF) 345, a keypad 350, a display 355, and a memory 360. The memory 360 includes a basic operating system (OS) program 361 and one or more applications 362.

The RF transceiver 310 receives, from the antenna 305, an incoming RF signal transmitted by an eNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the main processor 340 for further processing (such as for web browsing data).

The TX processing circuitry 315 receives analog or digital voice data from the microphone 320 or other outgoing baseband data (such as web data, e-mail, or interactive video game data) from the main processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The main processor 340 can include one or more processors or other processing devices and execute the basic OS program 361 stored in the memory 360 in order to control the overall operation of the UE 116. For example, the main processor 340 could control the reception of forward channel signals and the transmission of reverse channel signals by the RF transceiver 310, the RX processing circuitry 325, and the TX processing circuitry 315 in accordance with well-known principles. In some embodiments, the main processor 340 includes at least one microprocessor or microcontroller.

The main processor 340 is also capable of executing other processes and programs resident in the memory 360, such as operations for continuity of a SRVCC handover as described in embodiments of the present disclosure. For example, the main processor 340 can be able to indicate to a serving eNB that the SRVCC handover is not applicable and in response to the voice session initiated via the regular RTC IMS client, the main processor 340 can be able to cause the RF transceiver 310 to indicate to the serving eNB that the SRVCC handover is applicable. The main processor 340 can move data into or out of the memory 360 as required by an executing process. In some embodiments, the main processor 340 is configured to execute the applications 362 based on the OS program 361 or in response to signals received from eNBs or an operator. The main processor 340 is also coupled to the I/O interface 345, which provides the UE 116 with the ability to connect to other devices such as laptop computers and handheld computers. The I/O interface 345 is the communication path between these accessories and the main controller 340.

The main processor 340 is also coupled to the keypad 350 and the display unit 355. The operator of the UE 116 can use the keypad 350 to enter data into the UE 116. The display 355 may be a liquid crystal display or other display capable of rendering text and/or at least limited graphics, such as from web sites.

The memory 360 is coupled to the main processor 340. Part of the memory 360 could include a random access memory (RAM), and another part of the memory 360 could include a Flash memory or other read-only memory (ROM).

Although FIGURE 3A illustrates one example of UE 116, various changes may be made to FIGURE 3A. For example, various components in FIGURE 3A could be combined, further subdivided, or omitted and additional components could be added according to particular needs. As a particular example, the main processor 340 could be divided into multiple processors, such as one or more central processing units (CPUs) and one or more graphics processing units (GPUs). Also, while FIGURE 3A illustrates the UE 116 configured as a mobile telephone or smartphone, UEs could be configured to operate as other types of mobile or stationary devices.

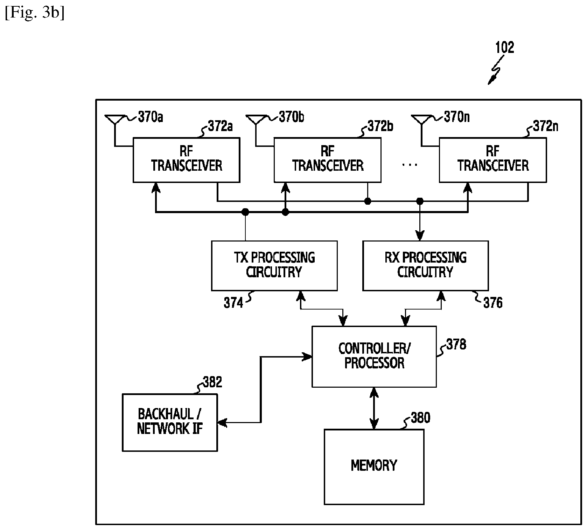

FIGURE 3B illustrates an example eNB 102 according to this disclosure. The embodiment of the eNB 102 shown in FIGURE 3B is for illustration only, and other eNBs of FIGURE 1 could have the same or similar configuration. However, eNBs come in a wide variety of configurations, and FIGURE 3B does not limit the scope of this disclosure to any particular implementation of an eNB. It is noted that eNB 101 and eNB 103 can include the same or similar structure as eNB 102.

As shown in FIGURE 3B, the eNB 102 includes multiple antennas 370a-370n, multiple RF transceivers 372a-372n, transmit (TX) processing circuitry 374, and receive (RX) processing circuitry 376. The eNB 102 also includes a controller/ processor 378, a memory 380, and a backhaul or network interface 382.

The RF transceivers 372a-372n receive, from the antennas 370a-370n, incoming RF signals, such as signals transmitted by UEs or other eNBs. The RF transceivers 372a-372n down-convert the incoming RF signals to generate IF or baseband signals. The IF or baseband signals are sent to the RX processing circuitry 376, which generates processed baseband signals by filtering, decoding, and/or digitizing the baseband or IF signals. The RX processing circuitry 376 transmits the processed baseband signals to the controller/ processor 378 for further processing.

The TX processing circuitry 374 receives analog or digital data (such as voice data, web data, e-mail, or interactive video game data) from the controller/processor 378. The TX processing circuitry 374 encodes, multiplexes, and/or digitizes the outgoing baseband data to generate processed baseband or IF signals. The RF transceivers 372a-372n receive the outgoing processed baseband or IF signals from the TX processing circuitry 374 and up-converts the baseband or IF signals to RF signals that are transmitted via the antennas 370a-370n.

The controller/processor 378 can include one or more processors or other processing devices that control the overall operation of the eNB 102. For example, the controller/ processor 378 could control the reception of forward channel signals and the transmission of reverse channel signals by the RF transceivers 372a-372n, the RX processing circuitry 376, and the TX processing circuitry 324 in accordance with well-known principles. The controller/processor 378 could support additional functions as well, such as more advanced wireless communication functions. For instance, the controller/processor 378 can perform the blind interference sensing (BIS) process, such as performed by a BIS algorithm, and decodes the received signal subtracted by the interfering signals. Any of a wide variety of other functions could be supported in the eNB 102 by the controller/processor 378. In some embodiments, the controller/ processor 378 includes at least one microprocessor or microcontroller.

The controller/processor 378 is also capable of executing programs and other processes resident in the memory 380, such as a basic OS. The controller/processor 378 is also capable of supporting continuity of a Single Radio Voice Call Continuity (SRVCC) handover as described in embodiments of the present disclosure. In some embodiments, the controller/processor 378 supports communications between entities, such as web RTC. The controller/processor 378 can move data into or out of the memory 380 as required by an executing process.

The controller/processor 378 is also coupled to the backhaul or network interface 335. The backhaul or network interface 382 allows the eNB 102 to communicate with other devices or systems over a backhaul connection or over a network. The interface 382 could support communications over any suitable wired or wireless connection(s). For example, when the eNB 102 is implemented as part of a cellular communication system (such as one supporting 5G, LTE, or LTE-A), the interface 382 could allow the eNB 102 to communicate with other eNBs over a wired or wireless backhaul connection. When the eNB 102 is implemented as an access point, the interface 382 could allow the eNB 102 to communicate over a wired or wireless local area network or over a wired or wireless connection to a larger network (such as the Internet). The interface 382 includes any suitable structure supporting communications over a wired or wireless connection, such as an Ethernet or RF transceiver.

The memory 380 is coupled to the controller/processor 378. Part of the memory 380 could include a RAM, and another part of the memory 380 could include a Flash memory or other ROM. In certain embodiments, a plurality of instructions, such as a BIS algorithm is stored in memory. The plurality of instructions are configured to cause the controller/processor 378 to perform the BIS process and to decode a received signal after subtracting out at least one interfering signal determined by the BIS algorithm.

As described in more detail below, the transmit and receive paths of the eNB 102 (implemented using the RF transceivers 372a-372n, TX processing circuitry 374, and/ or RX processing circuitry 376) support communication with aggregation of FDD cells and TDD cells.

Although FIGURE 3B illustrates one example of an eNB 102, various changes may be made to FIGURE 3B. For example, the eNB 102 could include any number of each component shown in FIGURE 3. As a particular example, an access point could include a number of interfaces 382, and the controller/processor 378 could support routing functions to route data between different network addresses. As another particular example, while shown as including a single instance of TX processing circuitry 374 and a single instance of RX processing circuitry 376, the eNB 102 could include multiple instances of each (such as one per RF transceiver).

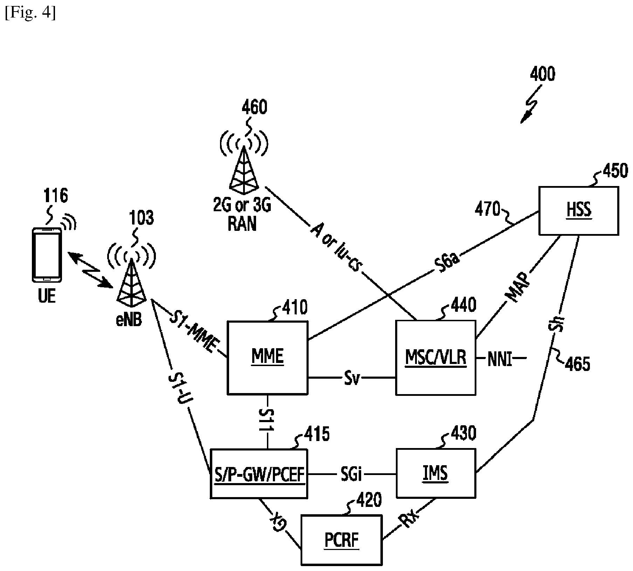

FIGURE 4 illustrates the overall architecture for handling a SRVCC handover process according to embodiments of the present disclosure. The embodiment shown in FIGURE 4 is for illustration only. Other embodiments could be used without departing from the scope of the present disclosure.

The UE 116 is a SRVCC capable UE and contains both the IP Multimedia System (IMS) client and Web Real Time Communication (WebRTC) IMS client (WIC) for initiating voice session over IMS. IMS 430 contains the necessary IMS functionality as defined in 3GPP TS 23.228 and 3GPP TS 23.237 for interworking with IMS client for Voice-over LTE (VoLTE) and Single Radio Voice Call Continuity (SRVCC), and WebRTC IMS client for voice communication over IMS.

The eNodeB (eNB) 103, the Mobility Management Entity (MME) 410, the Serving/ PDN-Gateway (S/P-GW)/ Policy and Charging Enforcement Function (PCEF) 415, the Policy and Charging Rules Function (PCRF) 420, the Mobile Services Switching Center (MSC)/ Visitor Location Register (VLR) 440, the Home Subscriber Server (HSS) 450, the 2/3G Radio Access Network (RAN) 460 and all associated reference points can be configured as in 3GPP TS 23.203, 3GPP TS 23.401, and 3GPP TS 23.216, which are incorporated herewith by reference.

As mentioned above, the WebRTC client in an LTE UE 116 can connect to an operator IMS over LTE by having an IMS functionality in the WebRTC IMS Client or WIC. However, some network services offered to the IMS client will not work for WebRTC IMS Client. One example is the Single Radio Voice Call Continuity (SRVCC) as defined in 3GPP TS 23.216 for VoLTE. The SRVCC is a technology that enables the voice service to be switched from a Packet Switching (PS) domain to a Circuit Switching (CS) domain. For the SRVCC, the eNB determining the handover to the CS RAT is required based on the presence of a QCI-1 bearer and the UE 116 internally switches the voice media carried of the IMS session within a QCI-1 bearer to a CS bearer over 2/3G RAT. If the eNB 103 triggers this kind of a SRVCC handover for voice session established by the WIC, then the voice session will drop after the UE 116 is commanded to switch to 2/3G RAT.

The eNB 103 will not trigger an SRVCC handover if certain pre-condition(s) are not met. Currently, the IMS can handle the voice session being established by the IMS client or the WIC the same way, which means that eNB 103 could possible trigger a false SRVCC handover for WIC initiated voice session. To overcome this issue, one proposal is to ensure the pre-condition for SRVCC cannot be met either due to a set of procedure being performed beforehand or based on some explicit indication in the network such that the eNB 103 is prevented from triggering SRVCC handover for the voice session is established by WebRTC client. The present disclosure provides various embodiments to ensure eNB 103 does not trigger SRVCC for voice session that is initiated by WIC.

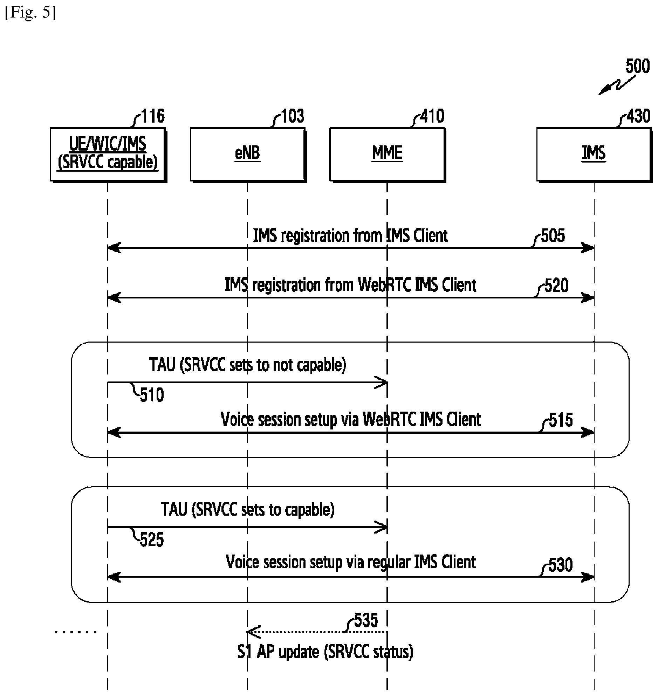

FIGURE 5 illustrates a flowchart 500 for handling a SRVCC handover by switching an SRVCC capability by a UE according to embodiments of the present disclosure. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a processing circuity in, for example, a UE, eNB or other entity.

In certain embodiments, the UE 116 switches its SRVCC capability to "possible" or "not possible" depended on which of a regular IMS client for VoLTE or an IMS client for WebRTC is initiating the voice session. By doing this, MME 410 is prevented from allowing network to trigger unintentional SRVCC handover.

When the WebRTC IMS Client (WIC) in UE 116 initiates a voice session, the WIC in UE 116 performs the IMS registration to IMS entity 430 as shown in step 505. Then, the WIC sends a Tracking Area Update to MME 410 to indicate that a SRVCC capability for the WIC in UE 115 is now "not possible" as shown in step 510. This "not possible" indication prevents the network to trigger SRVCC handover operation to UE 116. A voice session is setup between the WIC in UE 116 and IMS 430 via Web RTC in step 515.

Alternatively, when the IMS client in UE 116 attempts to initiate a voice session, the IMS client of UE 116 for VoLTE performs the IMS registration to IMS entity 430 as shown in step 520. Then, the IMS client sends a Tracking Area Update to MME 410 to indicate that its SRVCC capability is now "possible" as shown in step 525. The "SRVCC possible" indication allows the network to trigger SRVCC handover operation to the UE 116 when needed. A voice session is setup between the WIC in UE 116 and IMS 430 via regular IMS in step 530.

For both cases, the MME 410 can update the SRVCC possible indication to eNB 103, such as from possible to "not possible" or vice versa, via S1 AP message in step 535. This is because the SRVCC possible indication is given to eNB 103 during IDLE to ACTIVE transition, namely, in S1 AP Initial Context Setup Procedure, and the SRVCC possibility is not changed until the next IDLE to ACTIVE transition. In some embodiments, the MME 410 updates the SRVCC possible status in eNB 103 via an S1 AP message in step 530.

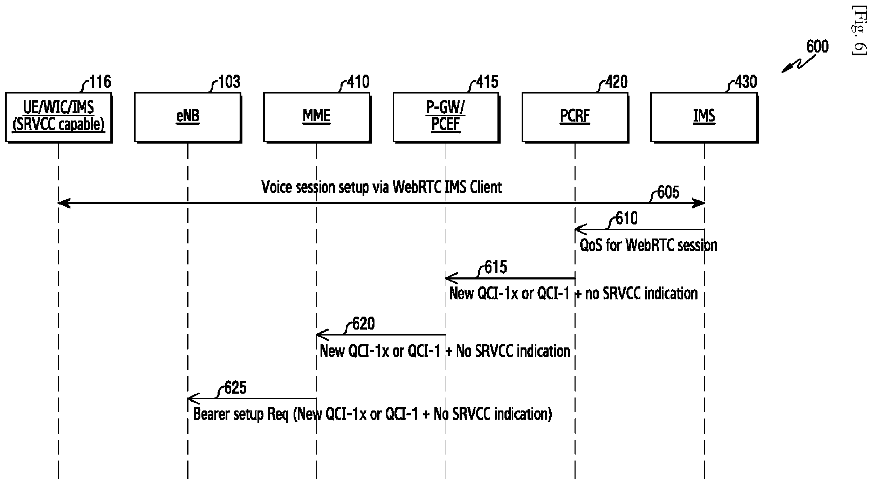

FIGURE 6 illustrates a flowchart 600 for handling a SRVCC handover by the explicit indication from Policy Control and Charging (PCC) according to one or more embodiments of the present disclosure. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a processing circuit in, for example, a UE, eNB or other entity.

In certain embodiments, the PCRF 420 explicitly indicates to the eNB 103 that the SRVCC is not allowed either by utilizing a no SRVCC indication and QCI-1, or by utilizing a new QCI value. The new QCI value can be an operator defined QCI value for indicating that the SRVCC is not allowed, and has a value different from QCI-1.

In the example shown in FIGURE 6, the WIC in UE 116 initiates a voice session with IMS 430 in step 605. Next, when setting up the EPS bearer for this voice session, IMS 430 indicates to PCRF 420 that this is a non SRVCC capable session, but requires similar QoS characteristic as QCI-1 as shown in step 610.

In step 615, PCRF 420, based on network policy, indicates to P-GW/PCEF 415 with QCI-1 using a no SRVCC indication, or a new QCI value as shown in FIGURE 6. Here, the new QCI value can be a newly defined index for suggesting no SRVCC, other than QCI-1.

As part of the dedicated bearer creation procedure in steps 620 and 625, the new QCI, or QCI-1 with no SRVCC indication is received by the eNB 103 via the MME 410. If a new QCI is used, it is expected that the operator has pre-configured the eNB 103 with this new QCI value so the QoS characteristic is similar to QCI-1 but without SRVCC trigger.

In certain embodiments, the PCRF 420 can assume that the bearer being created is for WebRTC session based on the identity of the AF/eP-CSCF, such as an IP address or preconfigured sender identity for the Rx session.

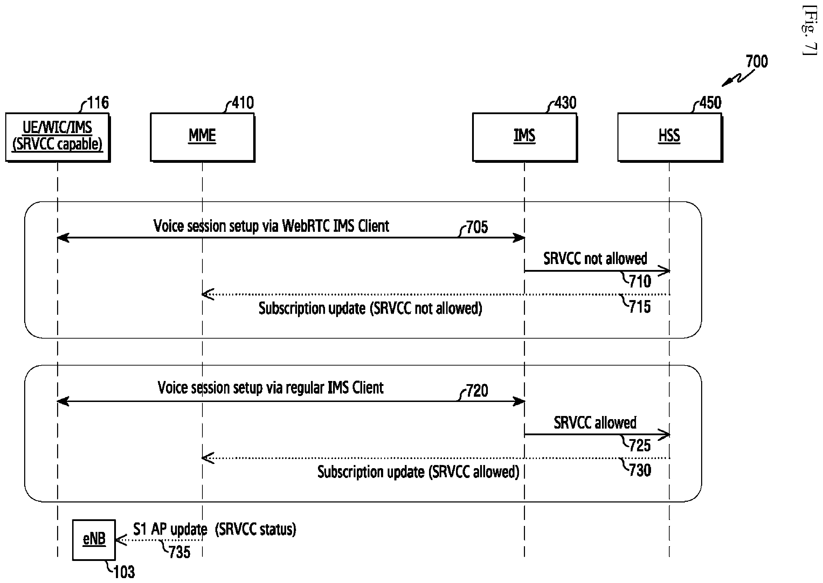

FIGURE 7 illustrates a flowchart 700 for handling a SRVCC handover in a HSS push model according to one or more embodiments of the present disclosure. The embodiment shown in FIGURE 7 is for illustration only. Other embodiments could be used without departing from the scope of the present disclosure. While the flow chart depicts a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The process depicted in the example depicted is implemented by a processing circuit in, for example, a UE, eNB or other entity.

In certain embodiments, the IMS 430 requests that the HSS 450 disable or allow SRVCC for this subscriber by updating the user data to the serving MME 410.

When the WIC in UE 116 initiates a voice session with IMS 430 as shown in step 705, IMS 410 requests, via Sh 465, the HSS 450 to disable SRVCC for UE 116 in step 710. In response, HSS 450 checks to determine if the current SRVCC status is already disabled or not. If not, it updates the status in serving MME 410 via S6a 470 to disable SRVCC for this subscriber in step 715.

Alternatively, the IMS client for VoLTE in UE 116 initiates a voice session with IMS 430 in step 720. IMS 430 requests, via Sh 465, the HSS 450 to allow SRVCC for this UE in step 725. In response, HSS 450 checks to determine if the current SRVCC status is already allowed or not. If it is not allowed, it updates the status in serving MME 410 via S6a 470 to allow SRVCC for this subscriber in step 730. For both cases, in step 735, the MME 410 can update the eNB 103 the status of SRVCC possible indication.

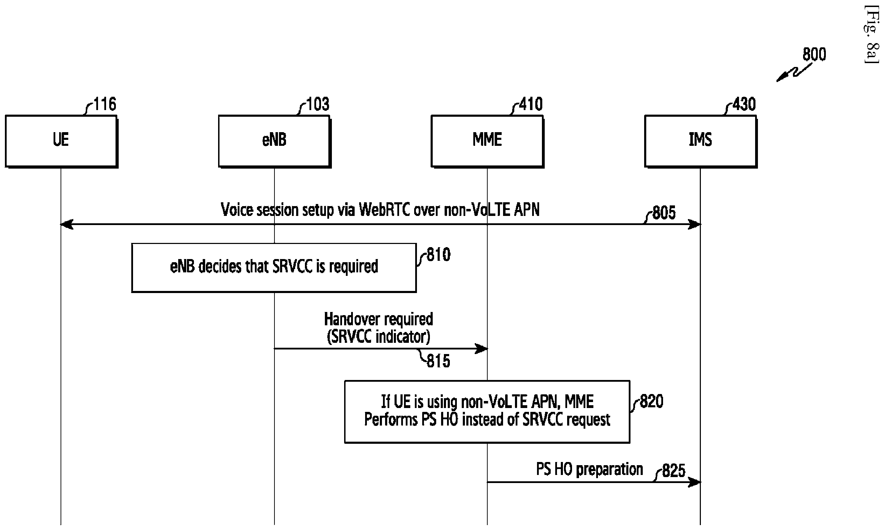

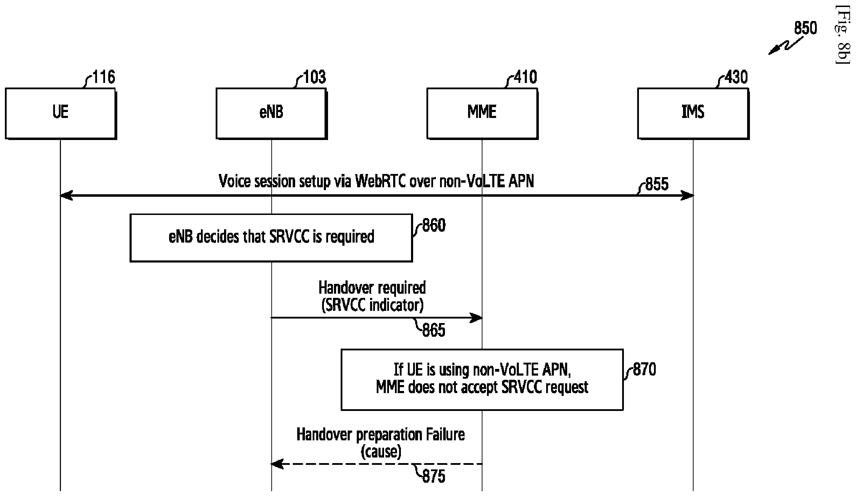

FIGURES 8A and 8B illustrate flowcharts 800, 850 for handling a SRVCC handover by APN-based MME control according to embodiments of the present disclosure. While the flow charts depict a series of sequential steps, unless explicitly stated, no inference should be drawn from that sequence regarding specific order of performance, performance of steps or portions thereof serially rather than concurrently or in an overlapping manner, or performance of the steps depicted exclusively without the occurrence of intervening or intermediate steps. The processes depicted in the examples depicted are implemented by a processing circuit in, for example, a UE, eNB or other entity.

In certain embodiments, the MME 410 detects that the SRVCC is not valid by checking the active QCI-1 and PDN relationship, that is, it is not activated for the well-known IMS APN. Well-known IMS APN is defined by GSMA -IR.88 "LTE Roaming Guidelines" where the APN name must be "IMS", which is also the APN Network Identifier part of the full APN. For Voice over LTE (VoLTE) roaming to work, a "well-known" Access Point Name (APN) used for IMS services means an APN reserved for VoLTE. The "well-known" IMS APN can be provisioned as the default APN for the IMS subscriber, meaning that there is no need to configure it to the device or the serving network.

Once the MME 410 detects that the SRVCC is invalid, the MME 410 performs a PS handover including QCI-1 instead of a SRVCC handover as illustrated in FIGURE 8A, or can indicate a failure back to eNB as illustrated in FIGURE 8B.

Referring to FIGURE 8A, when establishing a voice session via Web RTC, the WIC in UE 116 initiates a voice session with IMS 430 using PDN connection established for an APN that is not well-known IMS APN (e.g., APN not reserved for VoLTE) in step 805.

When eNB 103 decides that SRVCC is required for the UE 116, for example, based on the handover measurement result in step 810, eNB 103 sends a handover required message to MME 410. The message contains a SRVCC HO indication indicating that SRVCC HO is required in step 815.

The MME 410 checks whether the UE 116 has active QCI-1 bearer for PDN connection established for a well-known IMS APN or not in step 820. If the PDN connection is not for well-known IMS APN, the MME 410 decides that the SRVCC request is not applicable. Instead, the MME 410 executes a handover procedure to PS domain only.

Subsequently, the MME 410 performs the handover to PS domain only including QCI-1 toward the target radio system in step 825. For example, the QCI-1 bearer for voice session is handed over to PS domain of 2G/3G RAT.

FIGURE 8B illustrates another flowchart 850 for APN-based MME control according to embodiments of the present disclosure. In certain embodiments, when the SRVCC is not valid, the MME 410 rejects a SRVCC handover with a Handover Preparation Failure message to the eNB.

Similarly to FIGURE 8A, the embodiments include the same steps 805 to 825. The WIC in UE 116 initiates a voice session with IMS 430 using PDN connection established for an APN that is not well-known IMS APN in step 855. When eNB 103 decides that SRVCC is required for the UE 116, for example, based on the handover measurement result in step 860, eNB 103 sends a handover required message to MME 410. The message contains a SRVCC HO indication in step 865.

In step 870, the MME 410 checks whether the UE 116 has active QCI-1 bearer for PDN connection established for well-known IMS APN or not.

If the PDN connection is not for well-known IMS APN, the MME 410 decides that the SRVCC request is not applicable and returns a cause value to eNB 103 in a Handover Preparation Failure message in step 875. The Handover Preparation Failure message can include an existing cause value such as "Cell not available" or "Radio resources not available" or a new cause value to indicate SRVCC HO is not allowed.

In another embodiment, MME 410 includes a cause value to avoid eNB 103 retrying a handover immediately. In yet another embodiment, MME 410 includes a new cause value to indicate to eNB 103 that a SRVCC handover is not allowed and eNB 103 will not attempt a SRVCC handover for this session anymore.

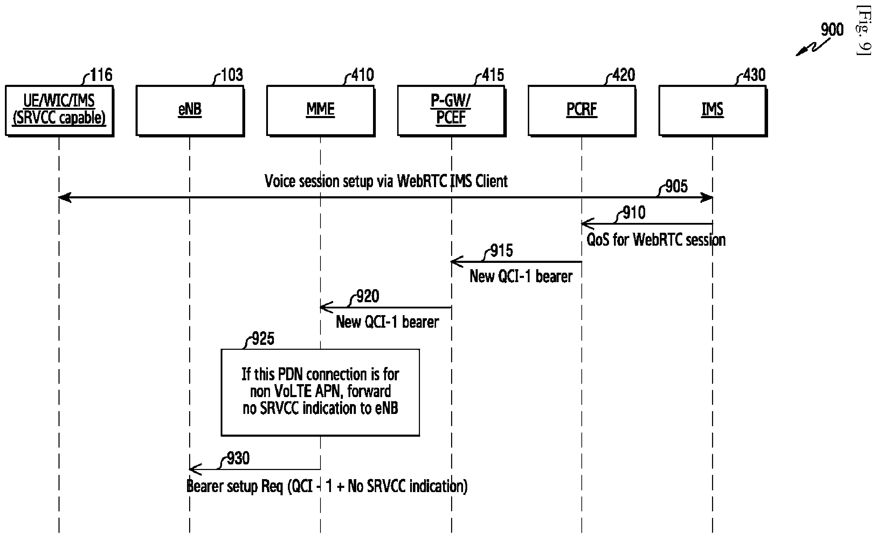

FIGURE 9 illustrates a flowchart 900 for handling the SRVCC handover by APN-based explicit indication according to embodiments of the present disclosure.

In certain embodiments, when the MME 410 determines that the QCI-1 activation is not valid for the SRVCC based on a PDN connection, and the MME 410 indicates to eNB 103 that the SRVCC for the QCI-1 bearer is not applicable.

When establishing a voice session via Web RTC, the WIC in UE 116 initiates a voice session with IMS 950 in step 905. When setting up the EPS bearer for this voice session, IMS 430 indicates to PCRF 420 that this session requires a Quality of Service (QoS) of voice session, such as, quality control indicator QCI-1, in step 910.

PCRF 420, based on network policy can initiate a new dedicated bearer setup with QCI-1 with PGW 415 in step 915. The bearer setup command is forwarded to MME 410 in step 920.

In block 925, MME 410 checks whether this new QCI-1 bearer is established for PDN connection using well-known IMS APN or not. If the PDN connection is not for well-known IMS APN, the MME 410 decides that the SRVCC request is not applicable.

In step 930, MME 410 includes the "no SRVCC indication (i.e., SRVCC not possible indication)" to the S1-Application Protocol (AP) bearer setup request message for the new bearer or update the eNB 103 the status of SRVCC possible indication similarly to step 735 of figure 7.

Based on the bearer setup request message or an S1-AP message with the SRVCC "not possible" indication, eNB 103 determines or identifies that this QCI-1 bearer is not applicable for SRVCC.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method performed by a network node in a wireless communication system, the method comprising:
determining whether a voice session between a user equipment, UE, and an internet protocol, IP, multimedia subsystem, IMS, is initiated by an application regarding web real time communication, web RTC;
if the voice session is initiated by the application regarding webRTC, determining a quality of service, QoS, class identifier, QCI for the voice session to be different from a QCI-1; and
transmitting, to a enhanced NodeB, eNB, information comprising the determined QCI for the voice session initiated by the application regarding web RTC.

2. The method of claim 1, further comprising:
transmitting, to the eNB, information indicating that a single radio voice call continuity SRVCC, handover is not applicable to the voice session, if the voice session is initiated by the application regarding web RTC; and
transmitting, to the eNB, information indicating that the SRVCC handover is applicable to the voice session, if the voice session is not initiated by the application regarding web RTC.

3. The method of claim 1, further comprising:
receiving, from the UE, capability information indicating that a single radio voice call continuity, SRVCC, handover is not applicable to the voice session if the voice session is initiated by the application regarding web RTC.

4. The method of claim 1, wherein determining the QCI for the voice session comprises:
determining the QCI based on a network policy that is pre-defined for preventing a drop of the voice session triggered by a single radio voice call continuity, SRVCC, handover.

5. The method of claim 1, further comprising:
receiving, from a home subscriber server, HSS, information for indicating whether a single radio voice call continuity, SRVCC, handover is applicable to the voice session or not; and
updating the information indicating whether the SRVCC handover is applicable to the voice session, based on the received information.

6. The method of claim 1, further comprising:
receiving, from the eNB, a request message of a single radio voice call continuity, SRVCC, handover for the voice session of the UE;
determining whether the voice session is related to a default APN for the IMS; and
performing a packet switched, PS, handover or transmitting a message indicating a handover failure to the eNB, if the voice session is not related to the default APN.

7. The method of claim 1, wherein transmitting the information comprises:
transmitting a bearer setup request message including the information to the eNB,
wherein the UE is capable of supporting a single radio voice call continuity, SRVCC handover.

8. A method performed by a user equipment, UE, in a wireless communication system, the method comprising:
performing an initiation of a voice session for the internet protocol, IP, multimedia subsystem, IMS, which is initiated by an application regarding web real time communication, web RTC;
performing a communication through the voice session regarding a quality of service, QoS, class identifier, QCI,
wherein the QCI for the voice session is determined to be different from a QCI-1 if the voice session is imitated by the application regarding web RTC.

9. The method of claim 8, further comprising:
transmitting, to a network node, information indicating that a single radio voice call continuity, SRVCC, handover is not applicable to the voice session, if the voice session is initiated by the application regarding web RTC; and
transmitting, to the network node, information indicating that the SRVCC handover is applicable, if the voice session is not initiated by the application regarding web RTC.

10. A method performed by an enhanced NodeB, eNB, in a wireless communication system, the method comprising:
performing an initiation of a voice session between a user equipment, UE, and an internet protocol, IP, multimedia subsystem, IMS which is initiated by an application regarding web real time communication, web RTC;
receiving, from a network node, information comprising a quality of service, QoS, class identifier, QCI, for the voice session; and
performing a communication with the UE through the voice session regarding the QCI,
wherein the QCI for the voice session is determined to be different from a QCI-1 if the voice session is imitated by the application regarding web RTC.

11. A network node in a wireless communication system, the network node comprising:
a transceiver; and
at least one processor coupled to the transceiver, configured to:
determine whether a voice session between a user equipment, UE, and an internet protocol, IP, multimedia subsystem, IMS, is initiated by an application regarding web real time communication (web RTC); and
determine a quality of service, QoS, class identifier, QCI for the voice session to be different from a QCI-1 if the voice session is initiated by the application regarding webRTC; and
control the transceiver to transmit, to a enhanced NodeB, eNB, information comprising the determined QCI for the voice session initiated by the application regarding web RTC.

12. The network node of claim 11, the network node configured to implement one of claims 2 to 7.

13. A user equipment, UE, in a wireless communication system, the UE comprising:
a transceiver; and
at least one processor coupled to the transceiver, configured to:
perform an initiation of a voice session for internet protocol, IP, multimedia subsystem, IMS, which is initiated by an application regarding web real time communication, web RTC;
perform a communication through the voice session regarding a quality of service, QoS, class identifier, QCI,
wherein the QCI for the voice session is determined to be different from a QCI-1 if the voice session is imitated by the application regarding web RTC.

14. The UE of claim 13, wherein the at least one processor is further configured to:
transmit, to a network node, information indicating that a single radio voice call continuity, SRVCC, handover is not applicable to the voice session, if the voice session is initiated by the application regarding web RTC; and
transmit, to the network node, information indicating that the SRVCC handover is applicable, if the voice session is not initiated by the application regarding web RTC of the UE.

15. An enhanced NodeB, eNB, in a wireless communication system, the eNB comprising:
a transceiver; and
at least one processor coupled to the transceiver, configured to:
perform an initiation of a voice session between a user equipment, UE, and an internet protocol, IP, multimedia subsystem, IMS which is initiated by an application regarding web real time communication, web RTC;
control the transceiver to receive, from a network node, information comprising a quality of service, QoS, class identifier, QCI, for the voice session; and
perform a communication with the UE through the voice session regarding the QCI,
wherein the QCI for the voice session is determined to be different from a QCI-1 if the voice session is imitated by the application regarding web RTC.

## Patentansprüche

1. Verfahren, das von einem Netzwerknoten in einem drahtlosen Kommunikationssystem ausgeführt wird, wobei das Verfahren Folgendes umfasst:
Bestimmen, ob eine Sprachsitzung zwischen einem Benutzergerät, UE, und ein Internetprotokoll(IP)-Multimedia-Subsystem(IMS) durch eine Anwendung bezüglich Web-Echtzeitkommunikation, web-RTC eingeleitet wird;
wenn die Sprachsitzung durch die Anwendung bezüglich webRTC eingeleitet wird, Bestimmen, dass sich ein QoS(Dienstgüte)-Klassenidentifikator(QCI) für die Sprachsitzung von einem QCI-1 unterscheidet; und
Übertragen von Informationen mit dem bestimmten QCI für die Sprachsitzung, die durch die Anwendung bezüglich web-RTC eingeleitet wird an einen erweiterten NodeB, eNB.

2. Verfahren nach Anspruch 1, ferner umfassend:
Übertragen von Informationen, die angeben, dass ein Einzel-Funksprachanrufkontinuität(SRVCC)-Handover auf die Sprachsitzung nicht anwendbar ist, an den eNB, wenn die Sprachsitzung durch die Anwendung bezüglich web-RTC eingeleitet wird; und
Übertragen von Informationen, die angeben, dass das SRVCC-Handover auf die Sprachsitzung anwendbar ist, an den eNB, wenn die Sprachsitzung nicht durch die Anwendung bezüglich web-RTC eingeleitet wird.

3. Verfahren nach Anspruch 1, ferner umfassend:
Empfangen von dem UE von Fähigkeitsinformationen, die angeben, dass ein Einzel-Funksprachanrufkontinuität(SRVCC)-Handover auf die Sprachsitzung nicht anwendbar ist, wenn die Sprachsitzung durch die Anwendung bezüglich web-RTC eingeleitet wird.

4. Verfahren nach Anspruch 1, wobei das Bestimmen des QCI für die Sprachsitzung Folgendes umfasst:
Bestimmen des QCI basierend auf Netzwerkrichtlinien, die vordefiniert sind, um einen Ausfall der Sprachsitzung zu verhindern, der durch ein Einzel-Funksprachanrufkontinuität(SRVCC)-Handover ausgelöst wird.

5. Verfahren nach Anspruch 1, ferner umfassend:
Empfangen von Informationen, die angeben, ob ein Einzel-Funksprachanrufkontinuität(SRVCC)-Handover auf die Sprachsitzung anwendbar ist oder nicht von einem Home Subscriber Server, HSS; und
Aktualisieren der Informationen, die angeben, ob das SRVCC-Handover auf die Sprachsitzung anwendbar ist, basierend auf den empfangenen Informationen.

6. Verfahren nach Anspruch 1, ferner umfassend:
Empfangen einer Anforderungsnachricht eines Einzel-Funksprachanrufkontinuität(SRVCC)-Handovers zur Sprachsitzung des UE von dem eNB;
Bestimmen, ob sich die Sprachsitzung auf einen Standard-APN für das IMS bezieht; und
Durchführen eines paketvermittelten, PS, Handovers oder Übertragen einer Nachricht, die einen Übergabefehler anzeigt, an den eNB, wenn sich die Sprachsitzung nicht auf den Standard-APN bezieht.

7. Verfahren nach Anspruch 1, wobei das Übertragen der Informationen Folgendes umfasst:
Übertragen einer Bearer-Setup-Anforderungsnachricht einschließlich der Informationen an den eNB,
wobei das UE ein Einzel-Funksprachanrufkontinuität(SRVCC)-Handover unterstützen kann.

8. Verfahren, das von einem Benutzergerät, UE, in einem drahtlosen Kommunikationssystem ausgeführt wird, wobei das Verfahren Folgendes umfasst:
Durchführen einer Einleitung einer Sprachsitzung für das Internetprotokoll(IP)-Multimedia-Subsystem(IMS), die durch eine Anwendung bezüglich web-Echtzeitkommunikation, web-RTC, eingeleitet wird;
Durchführen einer Kommunikation durch die Sprachsitzung bezüglich eines QoS(Dienstgüte)-QCI(Klassenidentifikators),
wobei festgestellt wird, dass sich der QCI für die Sprachsitzung von einem QCI-1 unterscheidet, wenn die Sprachsitzung durch die Anwendung bezüglich web-RTC eingeleitet wird.

9. Verfahren nach Anspruch 8, ferner umfassend:
Übertragen von Informationen, die angeben, dass ein Einzel-Funksprachanrufkontinuität(SRVCC)-Handover auf die Sprachsitzung nicht anwendbar ist, an den Netzwerkknoten, wenn die Sprachsitzung durch die Anwendung bezüglich web-RTC eingeleitet wird; und
Übertragen von Informationen, die angeben, dass das SRVCC-Handover auf die Sprachsitzung anwendbar ist, an den Netzwerkknoten, wenn die Sprachsitzung nicht durch die Anwendung bezüglich web RTC eingeleitet wird.

10. Verfahren, das von einem erweiterten NodeB, eNB, in einem drahtlosen Kommunikationssystem ausgeführt wird, wobei das Verfahren Folgendes umfasst:
Durchführen einer Einleitung einer Sprachsitzung zwischen einem Benutzergerät, UE, und einem Internetprotokoll(IP)-Multimedia-Subsystem(IMS), die durch eine Anwendung bezüglich web-Echtzeitkommunikation, web-RTC, eingeleitet wird;
Empfangen von Informationen, die einen QoS(Dienstgüte)-QCI(Klassenidentifikator) umfassen, für die Sprachsitzung von einem Netzwerkknoten; und
Durchführen einer Kommunikation mit dem UE durch die Sprachsitzung bezüglich des QCI,
wobei festgestellt wird, dass sich der QCI für die Sprachsitzung von einem QCI-1 unterscheidet, wenn die Sprachsitzung durch die Anwendung bezüglich web-RTC eingeleitet wird.

11. Netzwerkknoten in einem drahtlosen Kommunikationssystem, wobei der Netzwerkknoten Folgendes umfasst:
einen Transceiver; und
mindestens einen Prozessor, der mit dem Transceiver verbunden ist, konfiguriert zum:
Bestimmen, ob eine Sprachsitzung zwischen einem Benutzergerät, UE, und einem Internetprotokoll(IP)-Multimedia-Subsystem(IMS) durch eine Anwendung bezüglich web-Echtzeitkommunikation (web-RTC) eingeleitet wird; und
Bestimmen, dass sich ein QoS(Dienstgüte)-QCI(Klassenidentifikator) für die Sprachsitzung von einem QCI-1 unterscheidet, wenn die Sprachsitzung durch die Anwendung bezüglich web-RTC eingeleitet wird; und
Steuern des Transceivers zum Übertragen von Informationen, die den QCI umfassen, der für die Sprachsitzung, die durch die Anwendung bezüglich web-RTC eingeleitet wird, an einen erweiterten NodeB, eNB.

12. Netzwerkknoten nach Anspruch 11, wobei der Netzwerkknoten konfiguriert ist, um einen der Ansprüchen 2 bis 7 auszuführen.

13. Benutzergerät, UE, in einem drahtlosen Kommunikationssystem, wobei das UE Folgendes umfasst:
einen Transceiver; und
mindestens einen Prozessor, der mit dem Transceiver gekoppelt ist, konfiguriert zum:
Durchführen einer Einleitung einer Sprachsitzung für das Internetprotokoll(IP)-Multimedia-Subsystem(IMS), die durch eine Anwendung bezüglich web-Echtzeitkommunikation, web-RTC, eingeleitet wird;
Durchführen einer Kommunikation durch die Sprachsitzung bezüglich eines QoS(Dienstgüte)-QCI(Klassenidentifikators),
wobei festgestellt wird, dass sich der QCI für die Sprachsitzung von einem QCI-1 unterscheidet, wenn die Sprachsitzung durch die Anwendung bezüglich web-RTC eingeleitet wird.

14. UE nach Anspruch 13, wobei der mindestens eine Prozessor des Weiteren konfiguriert ist zum:
Übertragen von Informationen, die angeben, dass ein Einzel-Funksprachanrufkontinuität(SRVCC)-Handover auf die Sprachsitzung nicht anwendbar ist, an den Netzwerkknoten, wenn die Sprachsitzung durch die Anwendung bezüglich web-RTC eingeleitet wird; und
Übertragen von Informationen, die angeben, dass das SRVCC-Handover auf die Sprachsitzung anwendbar ist, an den Netzwerkknoten, wenn die Sprachsitzung nicht durch die Anwendung bezüglich web-RTC eingeleitet wird.

15. Erweiterter NodeB, eNB, in einem drahtlosen Kommunikationssystem, wobei der eNB Folgendes umfasst:
einen Transceiver; und
mindestens einen Prozessor, der mit dem Transceiver gekoppelt ist, konfiguriert zum:
Durchführen einer Einleitung einer Sprachsitzung zwischen einem Benutzergerät, UE, und einem Internetprotokoll(IP)-Multimedia-Subsystem(IMS), die durch eine Anwendung bezüglich web-Echtzeitkommunikation, web-RTC, eingeleitet wird;
Steuern des Transceivers zum Empfangen von Informationen, die einen QoS(Dienstgüte)-QCI(Klassenidentifikator) umfassen, für die Sprachsitzung von einem Netzwerkknoten; und
Durchführen einer Kommunikation mit dem UE durch die Sprachsitzung bezüglich des QCI,
wobei festgestellt wird, dass sich der QCI für die Sprachsitzung von einem QCI-1 unterscheidet, wenn die Sprachsitzung durch die Anwendung bezüglich web-RTC eingeleitet wird.

## Revendications

1. Procédé effectué par un nœud de réseau dans un système de communication sans fil, le procédé comprenant :
déterminer si une session vocale entre un équipement utilisateur, UE, et un sous-système multimédia de protocole Internet, IP, IMS, est initiée par une application concernant la communication en temps réel web, web RTC ;
si la session vocale est initiée par l'application concernant la webRTC, déterminer un identificateur de classe de qualité de service, QoS, QCI, pour que la session vocale soit différente d'un QCI-1 ; et
transmettre, à un Nœud B amélioré, eNB, des informations comprenant le QCI déterminé pour la session vocale initiée par l'application concernant la web RTC.

2. Procédé selon la revendication 1, comprenant en outre :
transmettre, à l'eNB, des informations indiquant qu'un transfert avec continuité d'appel vocal radio unique, SRVCC, n'est pas applicable à la session vocale, si la session vocale est initiée par l'application concernant la web RTC ; et
transmettre, à l'eNB, des informations indiquant que le transfert SRVCC est applicable à la session vocale, si la session vocale n'est pas initiée par l'application concernant la web RTC.

3. Procédé selon la revendication 1, comprenant en outre :
recevoir, depuis l'UE, des informations de capacité indiquant qu'un transfert avec continuité d'appel vocal radio unique, SRVCC, n'est pas applicable à la session vocale si la session vocale est initiée par l'application concernant la web RTC.

4. Procédé selon la revendication 1, où la détermination du QCI pour la session vocale comprend :
déterminer le QCI sur la base d'une politique de réseau qui est prédéfinie pour empêcher une interruption de la session vocale déclenchée par un transfert avec continuité d'appel vocal radio unique, SRVCC.

5. Procédé selon la revendication 1, comprenant en outre :
recevoir, à partir d'un serveur d'abonné résidentiel, HSS, des informations pour indiquer si un transfert avec continuité d'appel vocal radio unique, SRVCC, est applicable à la session vocale ou non ; et
mettre à jour les informations indiquant si le transfert SRVCC est applicable à la session vocale, sur la base des informations reçues.

6. Procédé selon la revendication 1, comprenant en outre :
recevoir, depuis l'eNB, un message de demande d'un transfert avec continuité d'appel vocal radio unique, SRVCC, pour la session vocale de l'UE ;
déterminer si la session vocale est associée à un APN par défaut pour l'IMS ; et
effectuer un transfert à commutation par paquets, PS, ou transmettre un message indiquant un échec de transfert à l'eNB, si la session vocale n'est pas associée à l'APN par défaut.

7. Procédé selon la revendication 1, où la transmission des informations comprend :
transmettre un message de demande d'établissement de support comprenant les informations à l'eNB,
où l'UE est capable de prendre en charge un transfert avec continuité d'appel vocal radio unique, SRVCC.

8. Procédé réalisé par un équipement utilisateur, UE, dans un système de communication sans fil, le procédé comprenant :
effectuer une initiation d'une session vocale pour le sous-système multimédia de protocole Internet, IP, IMS, qui est initiée par une application concernant la communication en temps réel web, web RTC ;
effectuer une communication via la session vocale concernant un identificateur de classe de qualité de service, QoS, QCI,
où le QCI pour la session vocale est déterminé comme étant différent d'un QCI-1 si la session vocale est initiée par l'application concernant la web RTC.

9. Procédé selon la revendication 8, comprenant en outre :
transmettre, à un nœud de réseau, des informations indiquant qu'un transfert avec continuité d'appel vocal radio unique, SRVCC, n'est pas applicable à la session vocale, si la session vocale est initiée par l'application concernant la web RTC ; et
transmettre, au nœud de réseau, des informations indiquant que le transfert SRVCC est applicable, si la session vocale n'est pas initiée par l'application concernant la web RTC.

10. Procédé effectué par un Nœud B amélioré, eNB, dans un système de communication sans fil, le procédé comprenant :
effectuer une initiation d'une session vocale entre un équipement utilisateur, UE, et un sous-système multimédia de protocole Internet, IP, IMS, qui est initiée par une application concernant la communication en temps réel web, web RTC ;
recevoir, à partir d'un nœud de réseau, des informations comprenant un identificateur de classe de qualité de service, QoS, QCI, pour la session vocale ; et
effectuer une communication avec l'UE via la session vocale concernant le QCI,
où le QCI pour la session vocale est déterminé comme étant différent d'un QCI-1 si la session vocale est initiée par l'application concernant la web RTC.

11. Nœud de réseau dans un système de communication sans fil, le nœud de réseau comprenant :
un émetteur-récepteur ; et
au moins un processeur couplé à l'émetteur-récepteur, configuré pour :
déterminer si une session vocale entre un équipement utilisateur, UE et un sous-système multimédia de protocole Internet, IP, IMS, est initiée par une application concernant la communication en temps réel web, web RTC ; et
déterminer un identificateur de classe de qualité de service, QoS, QCI, pour que la session vocale soit différente d'un QCI-1 si la session vocale est initiée par l'application concernant la webRTC ; et
commander l'émetteur-récepteur pour transmettre, à un Noeud B amélioré, eNB, des informations comprenant le QCI déterminé pour la session vocale initiée par l'application concernant la web RTC.

12. Nœud de réseau selon la revendication 11, le nœud de réseau étant configuré pour mettre en œuvre l'une des revendications 2 à 7.

13. Équipement utilisateur, UE, dans un système de communication sans fil, l'UE comprenant :
un émetteur-récepteur ; et
au moins un processeur couplé à l'émetteur-récepteur, configuré pour :
effectuer une initiation d'une session vocale pour le sous-système multimédia de protocole Internet, IP, IMS, qui est initiée par une application concernant la communication en temps réel web, web RTC ;
effectuer une communication via la session vocale concernant un identificateur de classe de qualité de service, QoS, QCI,
où le QCI pour la session vocale est déterminé comme étant différent d'un QCI-1 si la session vocale est initiée par l'application concernant la web RTC.

14. UE selon la revendication 13, où l'au moins un processeur est en outre configuré pour :
transmettre, à un nœud de réseau, des informations indiquant qu'un transfert avec continuité d'appel vocal radio unique, SRVCC, n'est pas applicable à la session vocale, si la session vocale est initiée par l'application concernant la web RTC ; et
transmettre, au nœud de réseau, des informations indiquant que le transfert SRVCC est applicable, si la session vocale n'est pas initiée par l'application concernant la web RTC de l'UE.

15. Noeud B amélioré, eNB, dans un système de communication sans fil, l'eNB comprenant :
un émetteur-récepteur ; et
au moins un processeur couplé à l'émetteur-récepteur, configuré pour :
effectuer une initiation d'une session vocale entre un équipement utilisateur, UE et un sous-système multimédia de protocole Internet, IP, IMS, qui est initiée par une application concernant la communication en temps réel web, web RTC ;
commander l'émetteur-récepteur pour recevoir, à partir d'un nœud de réseau, des informations comprenant un identificateur de classe de qualité de service, QoS, QCI, pour la session vocale ; et
effectuer une communication avec l'UE via la session vocale concernant le QCI,
où le QCI pour la session vocale est déterminé comme étant différent d'un QCI-1 si la session vocale est initiée par l'application concernant la web RTC.
